(19)

**Europäisches Patentamt**
**European Patent Office**
**Office européen des brevets**

(11) **EP 4 484 121 A1**

(12) **EUROPEAN PATENT APPLICATION**

(43) Date of publication:
**01.01.2025 Bulletin 2025/01**

(21) Application number: **23182444.2**

(22) Date of filing: **29.06.2023**

(51) International Patent Classification (IPC):
**B29C 51/14** (2006.01)        **B29B 11/14** (2006.01)
**G02C 7/04** (2006.01)         **G02C 13/00** (2006.01)
**G06F 30/23** (2020.01)        **B29C 45/00** (2006.01)
**B29D 11/00** (2006.01)        **G02C 11/00** (2006.01)

(52) Cooperative Patent Classification (CPC):
**B29C 51/14; B29B 11/14; G02C 7/04; G02C 11/10;**
**G06F 30/23;** B29D 11/00038; B29D 11/00826;
B29L 2011/0016

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Azalea Vision BV**
**9052 Ghent (BE)**

(72) Inventor: **Vásquez Quintero, Andrés**
**9052 Ghent (BE)**

(74) Representative: **AWA Sweden AB**
**Box 45086**
**104 30 Stockholm (SE)**

(54) **METHODS FOR DESIGNING AND MANUFACTURING A FLAT DEVICE**

(57)     A method for designing a flat device (100) to be thermoformed into a shape-retaining non-flat device (316) using a mold (214) is provided. The flat device comprises two concentric annular layers: a carrier layer (102), having an outer radius ($R_{cout}$) and a carrier layer width (Wc); and a support layer (104) having a support layer width (Ws). The support layer is mechanically attached to the carrier layer wherein an inner distance (GAP) is formed between an inner edge (106) of the carrier layer and an inner edge (108) of the support layer. The method comprises obtaining (1010) predetermined values for the outer radius of the carrier layer, the support layer width and the inner distance, obtaining (1020) a geometry of the mold, and obtaining (1030) material properties of the support layer and the carrier layer. The method further comprises performing (1040) at least two simulations of thermoforming a simulated flat device into a non-flat device using the mold, based on the obtained predetermined values, material properties, and geometry of the mold for at least two different carrier layer widths. The method further comprises determining (1050) a circumferential strain at an outer edge (314) of the support layer in each of the simulated non-flat devices. The method further comprises determining (1060), based on the determined circumferential strains, a linear relation (616) between the circumferential strain and a dimension ratio defined by

$$ratio = (W_C - (W_S + GAP))/R_{Cout}.$$

The method further comprises determining (1070), based on the determined linear relation, a value (ra-
tio$_{MNB}$) of the dimension ratio for which the strain is zero and determining (1080), from the dimension ratio for which the strain is zero, the width of the carrier layer in the flat device as

$$W_C = ratio * R_{Cout} + W_S + GAP.$$

Fig. 4

# Description

## Technical field

The present disclosure relates to methods for designing and manufacturing a flat device to be thermoformed into a non-flat device.

## Background

When forming a circular shape into a spherical shape with a free boundary condition at the edge, by means of thermoforming or other methods, the geometry experiences negative strain (compression) along the circumferential direction. Along the radial direction the strain remains zero. The circumferential strain may vary from zero in the center to a maximum level at the outer edge. This compressive strain may cause the materials of the geometry to compress and, depending on the choice of materials, to wrinkle or buckle. Certain materials cannot accommodate for compressive stress, such as thermoset materials, rigid materials, and thin layers, etc. For such materials, the wrinkles may provoke damages to the material, like cracks, delamination and ultimately malfunction.

One implementation in which a circular shape may be formed into a spherical shape is in the manufacture of contact lenses, and in particular smart contact lenses. A smart contact lens may include a smart platform comprising at least a part of the functionality of the smart contact lens. The smart platform may comprise functional components, such as electrical components and thin film electrical connections. The functional components may be sensitive to compression and strain. A small wrinkle of the material may translate to a wrinkle on a functional component, which may lead to cracks or weakening of the component.

In some prior solutions, the components are embedded in a thermoset flat material to protect the components. The thermoset material is then glued to the contact lens material, such as a soft silicone, while being pressed together with the contact lens material. As the thermoset material is not compressible, wrinkles usually appear on the thermoset material layer.

Further, aligning and centering the thermoset material with the contact lens material may be difficult, and may therefore make this solution unsuitable for mass production.

Other prior solutions deposit the components directly onto a flat thermoplastic material, which is thermoformed into a non-flat device. However, in such solutions, as the components are non-compressible, the components themselves may be wrinkled or even damaged by the strain caused by the thermoforming. Such wrinkles can provoke cracks on the components and damage their functionality.

There is therefore a need for novel solutions which minimize strain and wrinkling of sensitive materials in non-flat devices.

## Summary

It is therefore an object of the present disclosure to overcome at least some of the above-mentioned drawbacks and to provide methods of designing flat devices to be thermoformed into non-flat devices which minimize the strain on non-compressive materials.

According to an aspect of the present disclosure, a method for designing a flat device to be thermoformed into a shape-retaining non-flat device using a mold. The flat device comprises two concentric annular layers, a carrier layer, and a support layer. The carrier layer has an outer radius ($R_{Cout}$) and a carrier layer width ($W_C$). The support layer has a support layer width ($W_S$). The support layer is mechanically attached to the carrier layer. An inner distance $(GAP)$ is formed between an inner edge of the carrier layer and an inner edge of the support layer. The method comprises obtaining predetermined values for the outer radius of the carrier layer, the support layer width and the inner distance, obtaining a geometry of the mold and obtaining material properties of the support layer and the carrier layer. The method further comprises performing at least two simulations of thermoforming a simulated flat device into a non-flat device using the mold, based on the obtained predetermined values, material properties, and geometry of the mold for at least two different carrier layer widths. The method further comprises determining a circumferential strain at an outer edge of the support layer in each of the simulated non-flat devices. Further, the method comprises determining, based on the determined circumferential strains, a linear relation between the circumferential strain and a dimension ratio defined by

$$ratio = (W_C - (W_S + GAP))/R_{Cout}.$$

Based on the determined linear ratio, the method further comprises determining a value of the dimension ratio for which the strain is zero. From the dimension ratio for which the strain is zero, the method further comprises determining the width of the carrier layer in the flat device as

$$W_C = ratio * R_{Cout} + W_S + GAP.$$

Embodiments of the first aspect of the present disclosure provides methods for designing a flat device to be thermoformed into a non-flat device. The methods according to the present disclosure may be performed by a processing unit or a computer.

Specifically, the flat device comprises an annular support layer arranged concentrically on an annular platform layer. The design process may determine an optimal location and dimensions of the support layer with respect to the carrier layer, to avoid compressive stress and wrinkling of the support layer at the periphery of the device. In other words, the method may enable selecting where to place the carrier layer along the radial direction of the support layer to avoid, or at least reduce, wrinkles.

The platform layer may be made of a stretchable material. The support layer may be made of a less, or non-, stretchable material. More specifically, the material of the support layer may have a higher Young's modulus than the material of the carrier layer. The support layer may be used as a stress modulator when mechanically attached to, or embedded in, the carrier layer.

The inventors have realized that, along the radial direction of a non-flat device formed from a flat device, there is a point where the circumferential strain is zero. By connecting all such points, for all possible radial directions, a curve (or boundary) is formed at which the circumferential strain is zero. In the following, this curve may be referred to as the meridional neutral boundary or MNB. By determining the position of this boundary, the flat device may be designed such that the support layer is placed in a region where it is not subject to compressive strain when turned into a non-flat device.

Using the determined carrier layer width (Wc) together with the obtained outer radius of the carrier layer, the support layer width and the inner distance, the dimensions of the carrier layer and the support layer of the flat device can be determined. Using these values, the outer edge of the support layer may be placed at the MNB, i.e., where the calculated circumferential strain is zero. As the outer edge of the support layer is arranged at the MNB, the support layer will be arranged inside the boundary formed by the MNB, where the strain is positive when the flat device is thermoformed using the mold. Thus, the design method of the first aspect may reduce the risk of wrinkles in the support layer.

The MNB is an abstraction of the neutral plane (NP) concept. The neutral plane is a conceptual strain-free plane along the thickness of a material or hybrid stack of materials. When the piece of material or stack is loaded by a bending force, the material or stack is bent. An inner surface of the material/stack is subject to a compressive force (negative strain), while the outer surface is subject to tension (positive strain). The neutral plane defines the border between the part of the material/stack which is in compression, and the part of the material/stack which is in tension. In a piece of a single material, the neutral plane is located exactly at the middle of the thickness of the material. However, when different materials are used in a stack, the position of the neutral plane depends on the material properties and thicknesses of the materials used.

The inventors have realized that when a flat annular device is thermoformed into a non-flat device, the MNB defines a position along the radius of the non-flat device which is neither subject to compression nor tension in the radial circumferential direction. Inside the MNB, the non-flat device will experience positive strain in the circumferential direction, while outside the MNB the non-flat device will experience negative strain in the circumferential direction. Similarly to the neutral plane, the position of the MNB is affected by the material properties of the materials in the flat device, i.e., the material of the carrier layer and the material of the support layer. The position of the MNB is further affected by the width of each of the annular layers, and their relative positions and sizes.

The present disclosure provides a method for determining the meridional neutral boundary (MNB) by calculating the circumferential strain along the radial direction for different computer simulated non-flat devices.

The inventors have further realized that the ratio:

$$ratio = (W_C - (W_S + GAP))/R_{Cout}$$

has a linear relationship with the circumferential strain. Based on at least two different (computer) simulations of the non-flat device, using different carrier layer widths, a linear relationship between the ratio and the circumferential strain can be determined. From the linear relationship, it is possible to find a value of the ratio for which the circumferential strain is zero. Based on this value, it is in turn possible to determine the relative dimensions of the carrier layer and the support layer, to minimize the compressive strain imposed on the support layer when the flat device is thermoformed into the non-flat device.

The outer radius of the carrier layer, the support layer width, and the inner distance between the inner edge of the carrier layer and the inner edge of the support layer are design parameters which may be defined based on the non-flat device to be produced. For example, in embodiments in which the non-flat device is a platform for a smart contact lens, the outer radius of the carrier layer may be determined based on a preferred size of the contact lens. The support layer width may be selected such that the support layer may accommodate at least one component of the non-flat device. The inner distance may be determined such that the carrier layer may at least partially wrap around the inner edge of the support layer.

The steps of obtaining information, such as predetermined values and/or a geometry of a mold, may comprise loading, by a processing unit or a computer, said information from a computer readable storage medium, a cloud storage or similar. Alternatively, or additionally, the steps of obtaining information may comprise receiving the information from a user via a human machine interface.

Methods according to the present disclosure may enable thermoforming of platforms (flat devices) from circular to spherical (or other non-flat) geometries, while avoiding or at least reducing the compressive stress/strain on the relevant materials/components, mainly the ones located along the outer edge of the circular shape. By reducing the compressive stress/strain, the methods according to the present disclosure may provide non-flat devices without, or at least with reduced, wrinkles along the circumferential direction. Thus, the mechanical integrity of fragile and thin film components, inside or on the non-flat device, may be protected.

In the specific example of smart contact lenses, the methods according to the present disclosure may allow for thermoforming (and/or other forming) of the electronic platform before the integration on or in a contact lens, without wrinkles at the outer edge. The methods may facilitate the alignment of the electronic platform relative to the contact lens, control of the curvature of the contact lens and embedding of the electronic platform in the contact lens and make the manufacturing process more compatible with industrial processes for high volume production.

The annular shape of the flat device reduces the negative strain (compression) in the resulting non-flat device as compared with a disc with the same radius.

The present solution makes use of a carrier layer, on which a support layer is mechanically attached, to optimize the compressive strain at the support layer. According to some embodiments, the support layer may comprise thin film interconnections, antenna, and electronics components.

Furthermore, the present solutions may allow for a non-interrupted design. In other words, components may extend all the way around the support layer, e.g., in a closed loop, without being subject to wrinkling.

According to some embodiments, the material properties comprise a thickness of the support layer, a thickness of the carrier layer, and mechanical properties of the support layer and the carrier layer.

Like the neutral plane, the position of the MNB may depend on material mechanical properties of the materials in the flat device, as well as the thicknesses of the materials.

According to some embodiments, the support layer may comprise a thermoset material.

Thermoset materials have a high Young's modulus, and a highly reduced ability to compress or stretch. Such properties may ensure the mechanical protection of functional components embedded in the support layer. Further, once a thermoset material has been cured, its shape is set, as the name suggests. Once hardened, a thermoset material cannot me reshaped by melting.

For example, the support layer may comprise thin film polyimide (PI), an epoxy resin, or a polyester resin.

According to some embodiments, the carrier layer may comprise a thermoplastic material.

Thermoplastic materials, on the other hand, can be reshaped by thermoforming, melting, pressing, or injection molding.

For example, the carrier layer may comprise thermoplastic polyurethane (TPU), polycarbonate (PC), polylactic acid (PA) and/or polyethylene terephthalate (PET).

The support layer may have a Young's modulus significantly higher than the carrier layer. When force is applied to the flat or non-flat device, the carrier layer may stretch instead of the support layer, as the carrier layer is more flexible. For example, the support layer may have a Young's modulus 100 times higher than that of the carrier layer. More specifically, the support layer may have a Young's modulus 150 times higher, or even 200 times higher, than that of the carrier layer.

For example, the Young's modulus of TPU is 0.04 GPa, while the Young's modulus of PI is 8.3 GPa, which is more than 200 times larger.

According to some embodiments, the support layer comprises at least one electrical component.

The support layer may mechanically protect the electrical component.

For example, the support layer may comprise electrical interconnections, such as thin film gold interconnections. The support layer may comprise an antenna, such as a thin film gold antenna. The antenna may be a radio frequency (RF) loop antenna. An RF loop antenna may comprise a plurality of loops of plated gold. Further, the support layer may comprise silicon (Si) components, such as silicon chips. Such silicon chips may include Application Specific Integrated Circuits (ASICs), capacitors and/or a battery.

For example, gold interconnections and/or a (gold) RF antenna may be embedded inside the support layer. Other components, such as chips, may be positioned and connected on top of the support layer, or embedded inside the support layer. The support layer may be made form a material requiring curing, such as a thermoset material, which often takes place at high temperatures (e.g., 400°C). Not all components can resist such high temperatures. In such embodiments, such components may be better placed and connected on top of the support layer.

For example, RF antennas made of plated gold loops may be used for smart contact lenses. Interconnections between electrical components may be made of sputtered gold that can only withstand very little stretching, e.g., less than 1%, before breaking. For such devices, it is of large interest to know where to place the non-stretchable support layer including the antenna to avoid wrinkling.

According to some embodiments, the method may further comprise performing a first simulation for a first carrier layer width and performing a second simulation for a second carrier layer width. The first carrier layer width may smaller than $0.15 * R_{Cout}$, i.e., smaller than 15% of the outer radius of the carrier layer. The second carrier layer width may be larger than $0.3 * R_{Cout}$, i.e., larger than 30% of the outer radius of the carrier layer.

Performing the simulation for a first, narrower, width of the carrier layer, and for a second, wider, width of the carrier layer may provide that the resulting strain and ratio values for the respective simulation are relatively far apart. The linear relationship determined based on the respective strain and ratio values may thus be more accurately defined.

According to some embodiments, the simulation may be a finite element method (FEM) simulation.

An FEM simulation may allow modelling of complex configurations of materials in a stack, and of different geometries. FEM simulations may further allow selection of different material properties, such as viscoelastic, elastic, and hyperelastic properties. Further, FEM simulations may facilitate modelling of boundary and contact conditions such as friction and surfaces in contact between the mold and the structures to be thermoformed.

According to some embodiments, an inner radius of the carrier layer may be at least 3 mm.

A wearable optical device, such as a (smart) contact lens, may have an optical zone, through which light enters pupil of the wearer. In a wearable optical device, it is preferable not to put components in the optical zone, as they may interfere with the wearer's vision. In embodiments in which the non-flat device is a smart platform for a contact lens, limiting the inner radius to being at least 3 mm may ensure that any components in the smart platform do not interfere with the optical zone.

According to some embodiments, the mold may be a spherical mold.

A spherical mold may be used for shaping a wearable optical device, such as a (smart) contact lens. For example, the mold may be a spherical mold having a 6-10 mm radius, such as an 8 mm radius.

The mold may be in the shape of a spherical cap. Alternatively, the mold may have a different shape. For example, the mold may have a rounded symmetric shape with a non-constant curvature. The mold may have a first curvature (or radius of curvature) in a center portion of the mold, and a second curvature (or radius of curvature) at an edge portion of the mold.

According to an aspect of the present disclosure, a method of manufacturing a flat device to be thermoformed into a shape-retaining non-flat device using a mold is provided. The flat device comprises two concentric annular layers, a carrier layer, and a support layer. The carrier layer has an outer radius ($R_{Cout}$) and a carrier layer width ($W_C$). The support layer is made of a non-stretchable material and has a support layer width ($W_S$). The support layer is mechanically attached to the carrier layer. An inner distance (GAP) is formed between an inner edge of the carrier layer and an inner edge of the support layer. The method comprises determining values for the outer radius of the carrier layer, the support layer width and the inner distance. The method further comprises obtaining the width of the carrier layer using the method of any of the preceding claims. The method further comprises providing a carrier layer of a carrier layer material, the carrier layer having the predetermined outer radius and the obtained carrier layer width and providing a support layer of a support layer material, the support layer having the predetermined support layer width, and an inner radius ($R_{Sin}$) determined by

$$R_{Sin} = R_{Pout} - W_P + GAP.$$

The method further comprises arranging the support layer on the carrier layer to be concentric with the carrier layer and mechanically attaching the support layer to the carrier layer.

The second aspect of the present disclosure provides methods for manufacturing a flat device designed according to any of the methods of the first aspect of the disclosure.

In the specific example of smart contact lenses, the methods according to the second aspect may provide a flat device in the shape of an electronic platform to be thermoformed into a non-flat device prior to integration on or in a contact lens. The design and manufacture methods may provide that the flat electronic platform may be thermoformed into a non-flat device without (or at least with reduced) wrinkles of the support layer.

According to some embodiments, the method may further comprise providing a first and a second carrier layer, arranging the support layer between the first and second carrier layers and mechanically attaching together the first carrier layer, the support layer and the second carrier layer.

In such embodiments, the support layer may be embedded between the two carrier layers. Otherwise put, the support layer may be embedded in a carrier layer. It will be appreciated that, in such embodiments, the simulated flat device being thermoformed into a non-flat device also comprises a first and a second carrier layer.

The first and second carrier layer may be made of the same material. The first and second carrier layer may have the same thickness and/or size. When embedding the support layer between two carrier layers of the same thickness, the support layer may be located in the neutral plane (NP) in the stack formed by the carrier layers and the support layer. This may further prevent stretching or compression of the support layer. Further, the two carrier layers may form a barrier protecting the support layer, and any components thereon.

According to some embodiments, the mechanical attachment may comprise laminating the support layer to the carrier layer.

In embodiments including a first and a second carrier layer, the mechanical attachment may comprise laminating attaching together the first carrier layer, the support layer and the second carrier layer.

According to some embodiments, the method may further comprise providing at least one electrical component embedding the at least one electrical component in the support layer.

According to a third aspect of the present disclosure, a method of manufacturing a shape retaining non-flat device is provided. The method comprises providing a flat device in accordance with any of the embodiments of the second aspect of the present disclosure. The method further comprises thermoforming the flat device into a shape retaining non-flat device using a mold.

The third aspect of the present disclosure provides methods for manufacturing shape retaining non-flat device by thermoforming a flat device manufactured according to any of the methods of the second aspect of the disclosure.

In the example of smart contact lenses, the methods according to the third aspect may provide a non-flat electronic platform which may be integrated on or in a (smart) contact lens.

According to a fourth aspect of the present disclosure, a computer readable medium is provided. The computer readable medium comprises instructions that, when executed by a processing device, cause the processing device to perform the steps of the methods of the first aspect of the present disclosure.

It will be appreciated that a computer readable medium may alternatively or additionally comprise instructions that, when executed by a processing device of a manufacturing device or system, causes the processing device of the manufacturing device or system to perform the steps of the methods of the second aspect and or the third aspect of the present disclosure.

This and other objects are achieved by means of a method for designing a flat device as defined in the appended independent claim. Other embodiments are defined by the dependent claims.

**Brief description of drawings**

Exemplifying embodiments will now be described in more detail, with reference to the following appended drawings:

Figure 1 is a schematic illustration of a flat device in accordance with some embodiments;

Figure 2 shows a cross-section of a flat device, in accordance with some embodiments, and a mold;

Figure 3 shows a cross-section of a non-flat device formed by thermoforming a flat device, in accordance with some embodiments;

Figure 4 is a perspective illustration of a non-flat device formed by thermoforming a flat device, in accordance with some embodiments;

Figure 5 is an illustration of the step of thermoforming a flat device to a non-flat device using a convex mold, in accordance with some embodiments;

Figure 6 illustrates a linear relationship between the circumferential strain of a simulated non-flat device and the defined ratio, in accordance with some embodiments;

Figure 7 is a schematic illustration of a flat device including an electrical component in the form of an antenna, in accordance with some embodiments: and

Figure 8 illustrates a step of a method for manufacturing a flat device, in accordance with some embodiments

Figure 9 is a flowchart illustrating steps of a method for designing a flat device, in accordance with some embodiments;

Figure 10 is a flowchart illustrating steps of a method for manufacturing a flat device, in accordance with some embodiments.

As illustrated in the figures, the sizes of the elements and regions may be exaggerated for illustrative purposes and, thus, are provided to illustrate the general structures of the embodiments. Like reference numerals refer to like elements throughout.

**Detailed description**

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

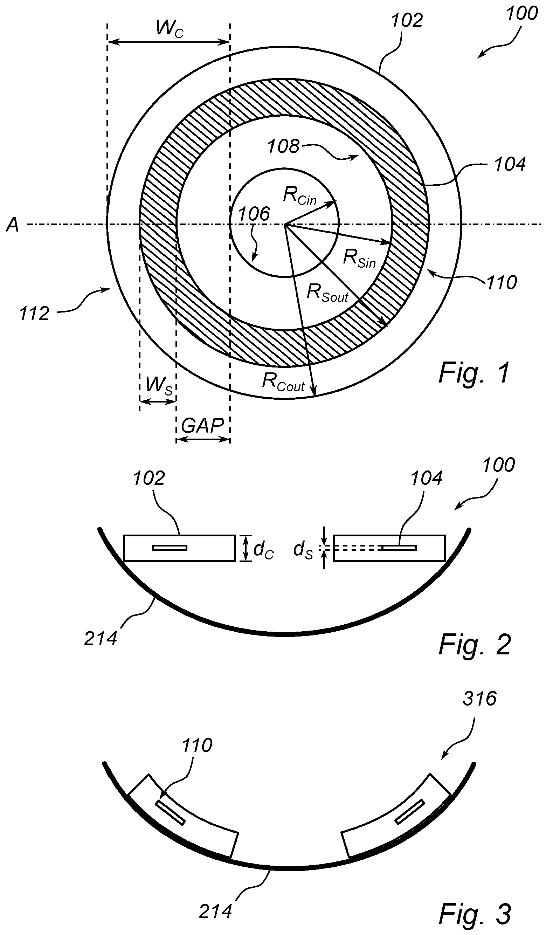

With reference to Figures 1-3, a flat device 100 to be thermoformed into a non-flat device 316 using a mold 214 will be described.

Figure 1 is a schematic illustration of a flat device 100 which may be designed in accordance with any of the methods of the first aspect of the present disclosure and manufactured in accordance with any of the methods of the second aspect of the present disclosure.

The flat device 100 comprises an annular support layer 104 mechanically attached to an annular carrier layer 102. The carrier layer 102 has an inner edge 106 defining an inner radius $R_{Cin}$, and an outer edge 112 defining an outer radius $R_{Cout}$. The carrier layer 102 further has a width Wc, defined by the outer radius $R_{Cout}$ and the inner radius $R_{Cin}$ of the carrier layer 102. The support layer 104 has an inner edge 108 defining an inner radius $R_{Sin}$, and an outer edge 110 defining an outer radius Rsout. The support layer 104 further has a width Ws, defined by the outer radius Rsout and the inner radius $R_{Sin}$ of the support layer 104. An inner distance GAP is formed between the inner edges 106, 108 of the carrier layer 102 and the support layer 104.

Figure 2 shows a cross section, taken along the line A in Figure 1, of the flat device 100 and a mold 214. The mold 214 is a spherical mold, which may be used to thermoform the flat device 100 into a non-flat device. As is shown in Figure 2, the support layer 104 has a support layer thickness ds, and the carrier layer 104 has a carrier layer thickness dc. Figure 2 also illustrates that the support layer 104 may be embedded in the carrier layer 102.

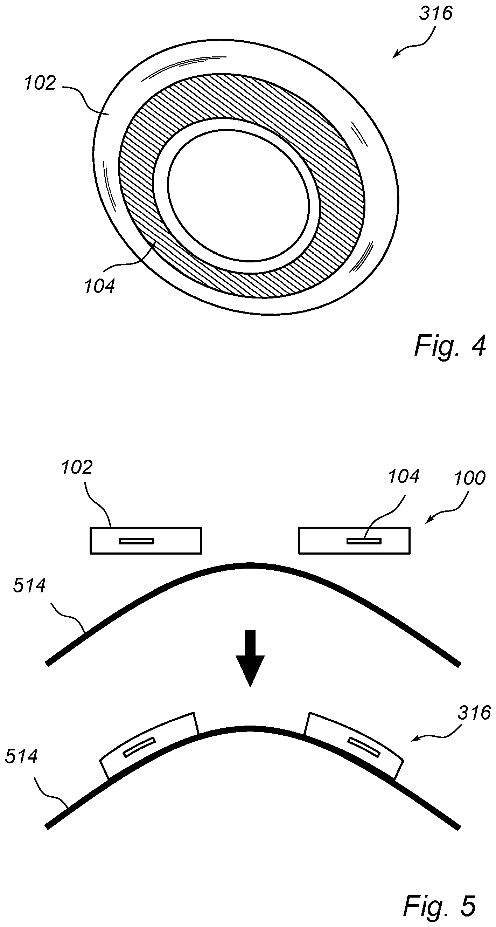

Figure 3 shows a cross section of a non-flat device 316 formed by thermoforming the flat device 100 using the mold 214. When thermoforming, the flat device 100 is heated to a temperature at which the carrier layer is pliable or moldable. The flat device 100 is then pressed into the mold 214 and allowed to cool. In Figure 3, the carrier layer 102 has been thermoformed to follow the shape of the mold 214. The support layer 104 also bends slightly to follow the shape of the carrier layer 102 and the mold 214. However, the support layer 104 is less stretchable than the carrier layer 102 and may experience less of a deformation than the carrier layer 104. Figure 4 shows a perspective view of a similar non-flat device 316 formed by thermoforming a flat device 100 using a mold 214.

The example described with reference to Figures 2 and 3 uses a concave mold 214. Instead of a concave mold 214, a convex mold 514 may be used. Figure 5 illustrates a step of thermoforming a flat device 100 into a non-flat device 316 using a convex mold 514. In this embodiment, the flat device 100 is pressed onto the mold 514 instead of into the mold 214.

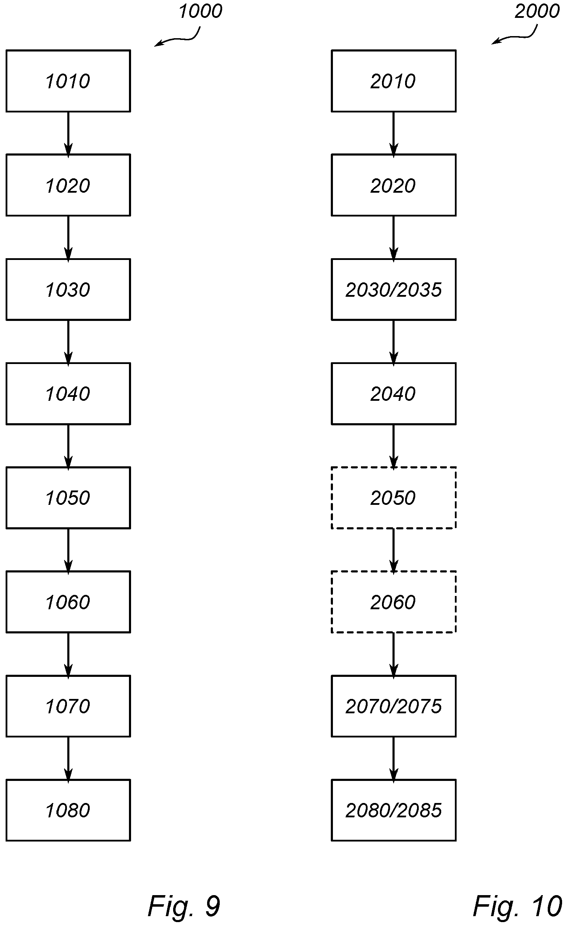

With additional reference to Figure 9, a method 1000 of designing a flat device 100 to be thermoformed into a non-flat device 316 using a mold 214 will be described.

The method 1000 comprises obtaining, at step 1010, predetermined values for the outer radius $R_{Cout}$ of the carrier layer 102, the support layer width Ws and the inner distance GAP. As previously described, these values may be design parameters set by a designer or operator based on the intended use of the non-flat device.

At step 1020, the method 1000 comprises obtaining a geometry of the mold 214, 514 to be used when thermoforming the flat device 100. The geometry of the mold may describe the shape and the size of the mold. For example, the geometry of the mold may describe that the mold is a spherical mold of a defined radius.

At step 1030, material properties of the support layer 102 and the carrier layer 104 are obtained. The material properties may comprise mechanical properties of the materials used for the support layer 102 and the carrier layer 104. For example, models may be used to represent the material properties of the support layer 102 and the carrier layer 104. The support layer 102 may be represented by a viscoelastic model. The carrier layer 104 may be represented by an elastic model. Viscoelastic properties of the support layer may be determined based on dynamic mechanical analysis (DMA) measurements at different strain rates and temperatures. The material properties (or models) may be used to represent the materials of the support layer 102 and the carrier layer 104 during the simulation of thermoforming of a flat device into a non-flat device.

At step 1040, at least two simulations are performed. Each of the simulations simulate the thermoforming of a flat device into a non-flat device, using a mold with the obtained geometry. The simulated flat devices have dimensions set based on the obtained predetermined values, i.e., the outer radius Rcout of the carrier layer 102, the support layer width Ws and the inner distance GAP, and the obtained material properties of the carrier layer 102 and the support layer 104. However, each of the different simulated flat devices has a different carrier layer width Wc.

At step 1050, the circumferential strain at the outer edge 110 of the support layer 104 is determined in each of the simulated non-flat devices 316.

At step 1060, a linear relation between the circumferential strain and a dimension ratio defined by

$$ratio = (W_C - (W_S + GAP))/R_{Cout}$$

is determined. The linear relation is based on the determined circumferential strains and the input values determined for each of the simulations. As the relation between the circumferential strain and the determined ratio is linear, two simulations may be enough to determine the relation.

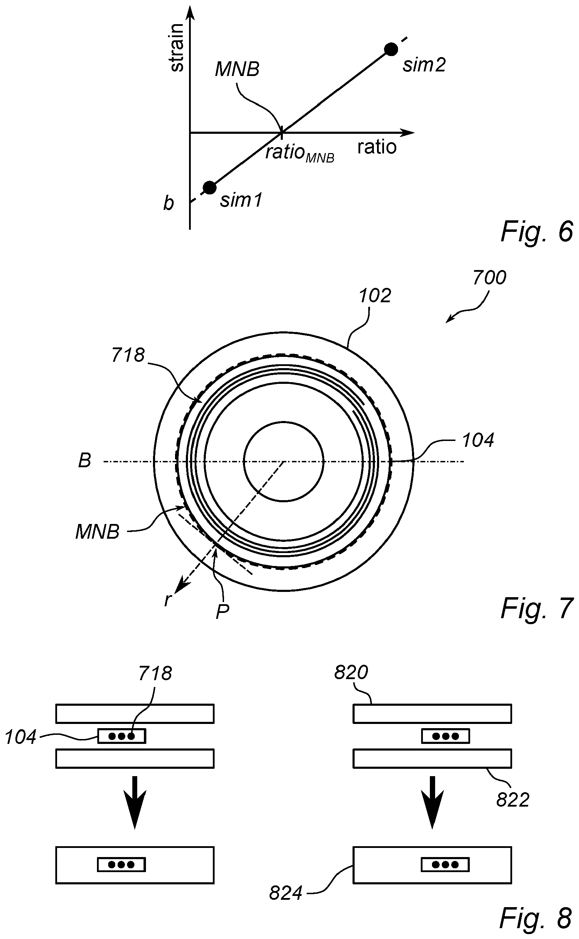

Further reference will now be made to Figure 6, which illustrates an example of such a linear relation. Figure 6 illustrates a plot of the ratio, on the horizontal axis, and the determined circumferential strain at the outer edge of the support layer, on the vertical axis, for two different simulations sim1 and sim2. A linear relation between the circumferential strain and the dimension ratio has been plotted based on the values from the two simulations sim1 and sim2. The linear relation may be described as

$$strain = slope * ratio - b$$

wherein the slope is the slope or gradient of the straight line, and b is the strain achieved when the ratio is equal to zero.

At step 1070, a value of the dimension ratio for which the strain is zero is determined based on the determined relation. In Figure 6, this is equivalent to determining the ratio value $ratio_{MNB}$ for the point marked MNB, where the linear relation intersects the horizontal axis. Based on the above linear relation, the ratio value for which the strain is zero may be expressed as:

$$ratio_{MNP} = b/slope.$$

In other words, the design methods according to the present disclosure identify a ratio between the width Wc of the carrier layer 102, the width Ws of the support layer 104, the inner distance GAP and the outer radius Rcout, for which the circumferential strain at the outer edge 110 of the support layer 104 will be zero.

At step 1080, the width of the carrier layer Wc is determined, based on the determined ratio value $ratio_{MNB}$ and the predetermined design parameters Ws, GAP and Rcout as:

$$W_C = ratio_{MNB} * R_{Cout} + W_S + GAP.$$

Further reference will now be made to Figure 7, illustrating a flat device 700 which may be designed in accordance with any of the methods of the first aspect of the present disclosure and manufactured in accordance with any of the methods of the second aspect of the present disclosure.

Figure 7 shows a flat device 700. The flat device 700 may be equivalent to the flat device 100, except in that an electrical component, specifically a thin film antenna 718, is embedded in the support layer 104.

Further, in figure 7, the MNB is indicated with a dashed line. The outer edge of the support layer 104 is arranged at the MNB. In Figure 7, the MNB has a circular shape. As described above, when the flat device 700 is thermoformed into a non-flat device, there is a point P, for each radial direction r, for which the circumferential strain is neither positive nor negative. Inside this point P, i.e., closer to the center, the circumferential strain is positive. Outside the point P, i.e., further away from the center, the circumferential strain is negative. The MNB comprises all the points *P* for all the different radial directions r.

Using the determined carrier layer width Wc together with the design parameters (predetermined values), i.e., the outer radius Rcout of the carrier layer 102, the support layer width Ws and the inner distance GAP, the dimensions of the carrier layer 102 and the support layer 104 of the flat device 100, 700 can be determined. Using these values, the outer edge 110 of the support layer 104 will be placed at the calculated MNB, i.e., the curve where the circumferential strain is zero. In principle, any component located at a radius smaller than the MNB will experience a tensile strain, when the flat device is thermoformed into a non-flat device, therefore avoiding wrinkles due to compressive strain. As the outer edge 110 is arranged at the MNB, the support layer 104 will be arranged inside the MNB. Thus, the risk of wrinkling of the support layer 104 may be reduced or avoided.

With additional reference to Figure 10, a method 2000 of manufacturing a flat device 100 to be thermoformed into a non-flat device 316 using a mold 214 will be described.

Figure 10 is a flowchart illustrating the method 2000. Figure 8 is a cross-section taken along the line B in Figure 7. It illustrates a number of the optional steps of the method 2000.

The method 2000 comprises, at step 2010, determining values for the outer radius of the carrier layer Rcout, the support layer width $W_S$, and the inner distance GAP. As previously described, these parameters may be determined based on the desired size and purpose of the flat device.

At step 2020, the method 2000 comprises obtaining the width Wc of the carrier layer 104 using the design methods according to the first aspect of the disclosure, such as the method 1000 described above with reference to Figure 9.

At step 2030, the method 2000 comprises providing a carrier layer 102 of a carrier layer material, the carrier layer 102 having the predetermined outer radius Rcout and the obtained carrier layer width Wc

Alternatively, the method 2000 may comprise providing, at step 2035, a first carrier layer 820, and a second carrier layer 822, as illustrated in Figure 8. Both the first carrier layer 820 and the second carrier layer 822 have the predetermined outer radius Rcout and the obtained carrier layer width Wc The method 2000 further comprises, at step 2040, providing a support layer 104 of a support layer material. The support layer 104 has the predetermined support layer width Ws, and an inner radius $R_{Sin}$ determined by

$$R_{Sin} = R_{Pout} - W_P + GAP.$$

In some embodiments, the method comprises, at step 2050, providing at least one electrical component, such as the antenna 718 illustrated in Figure 7 and 8. The method may further comprise, at step 2060, embedding the at least one electrical component in the support layer 104.

At step 2070, the method comprises arranging the support layer 104 and the carrier layer 102 to be concentric.

In embodiments in which a first and a second carrier layer 820, 822 have been provided, the method may comprise, at step 2075, arranging the support layer 104 between the first and second carrier layers 820, 822, such that all three layers are concentric, as is illustrated in Figure 8.

The method further comprises, at step 2080, mechanically attaching the support layer 104 to the carrier layer 102, for example by laminating.

In embodiments in using two carrier layers, the method may instead comprise, as step 2085, attaching together the first carrier layer 820, the support layer 104 and the second carrier layer 822. The support layer 104 may thus become embedded in a carrier layer 824.

The person skilled in the art realizes that the present invention by no means is limited to the preferred embodiments described above. On the contrary, many modifications and variations are possible within the scope of the appended claims.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

**Claims**

1. A method (1000) for designing a flat device (100) to be thermoformed into a shape-retaining non-flat device (316) using a mold (214), the flat device comprising two concentric annular layers: a carrier layer (102), having an outer radius ($R_{Cout}$) and a carrier layer width (Wc); and a support layer (104) having a support layer width (Ws), mechanically attached to the carrier layer wherein an inner distance (GAP) is formed between an inner edge (106) of the carrier layer and an inner edge (108) of the support layer; the method comprising:

   obtaining (1010) predetermined values for the outer radius of the carrier layer, the support layer width and the inner distance;
   obtaining (1020) a geometry of the mold;
   obtaining (1030) material properties of the support layer and the carrier layer;
   performing (1040) at least two simulations of thermoforming a simulated flat device into a non-flat device using the mold, based on the obtained predetermined values, material properties, and geometry of the mold for at least two different carrier layer widths;
   determining (1050) a circumferential strain at an outer edge (110) of the support layer in each of the simulated non-flat devices;
   determining (1060), based on the determined circumferential strains, a linear relation between the circumferential strain and a dimension ratio defined by $ratio = (W_C - (W_S + GAP))R_{Cout}$;
   determining (1070), based on the determined linear relation, a value of the dimension ratio ($ratio_{MNB}$) for which the strain is zero;

   determining (1080), from the dimension ratio for which the strain is zero, the width of the carrier layer in the flat device as $W_C = ratio_{MNP} * R_{Cout} + W_S + GAP$.

2. The method of any of the preceding claims, wherein said material properties comprise a thickness (ds) of the support layer, a thickness (dc) of the carrier layer and mechanical properties of the support layer and the carrier layer.

3. The method of any of the preceding claims, wherein said support layer comprises a thermoset material.

4. The method of any of the preceding claims, wherein said carrier layer comprises a thermoplastic material.

5. The method of any of the preceding claims, wherein said support layer comprises at least one electrical component.

6. The method of any of the preceding claims, wherein said performing at least two simulations comprises performing a first simulation for a first carrier layer width and performing a second simulation for a second carrier layer width, wherein the first carrier layer width is smaller than $0.15 * R_{Cout}$ and the second carrier layer width is larger than $0.3 * R_{Cout}$.

7. The method of any of the preceding claims, wherein said simulation is a finite element method, FEM, simulation.

8. The method of any of the preceding claims, wherein an inner radius ($R_{Cin}$) of the carrier layer is at least 3 mm.

9. The method of any of the preceding claims, wherein the mold is a spherical mold.

10. A method of manufacturing a flat device (100) to be thermoformed into a shape-retaining non-flat device (316) using a mold (214), the flat device comprising two concentric annular layers: a carrier layer (102), having an outer radius ($R_{Cout}$) and a carrier layer width (Wc); and a support layer (104) having a support layer width (Ws), mechanically attached to the carrier layer wherein an inner distance (GAP) is formed between an inner edge (104) of the carrier layer and an inner edge (106) of the support layer; the method comprising:

   determining (2010) values for the outer radius of the carrier layer, the support layer width and the inner distance;
   obtaining (2020) the width of the carrier layer using the method of any of the preceding claims;

providing (2030) a carrier layer of a carrier layer material, the carrier layer having the predetermined outer radius and the obtained carrier layer width;

providing (2040) a support layer of a support layer material, the support layer having the predetermined support layer width, and an inner radius ($R_{Sin}$) determined by $R_{Sin} = R_{Pout} - W_P + GAP$;

arranging (2070) the support layer on the carrier layer to be concentric with the carrier layer; and mechanically (2080) attaching the support layer to the carrier layer.

11. The method of claim 10, further comprising:

providing (2035) a first and a second carrier layer; and

arranging (2075) the support layer between the first and second carrier layers;

mechanically (2085) attaching together the first carrier layer, the support layer and the second carrier layer.

12. The method of any of claims 10-11, wherein said mechanical attachment comprises laminating the support layer to the carrier layer.

13. The method of any of claims 10-12, further comprising:

providing (2050) at least one electrical component; and

embedding (2060) the at least one electrical component in the support layer.

14. A method of manufacturing a shape retaining non-flat device (316), the method comprising:

providing a flat device (100) in accordance with any of claims 10-13; and

thermoforming the flat device into a shape retaining non-flat device using a mold (214).

15. A computer readable medium comprising instructions that, when executed by a processing device, cause the processing device to perform the steps of any of the claims 1-9.

Fig. 1

Fig. 2

Fig. 3

*Fig. 4*

*Fig. 5*

Fig. 6

Fig. 7

Fig. 8

Fig. 9

Fig. 10

| | Europäisches Patentamt European Patent Office Office européen des brevets | **EUROPEAN SEARCH REPORT** | Application Number EP 23 18 2444 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/113361 A1 (OPTHROTH INC [KR]) 22 June 2023 (2023-06-22) * paragraph [0029] - paragraph [0030]; claims 1-4,6,12; figures 1-6 * * paragraph [0057] - paragraph [0075] * | 1-15 | INV. B29C51/14 B29B11/14 G02C7/04 G02C11/10 G02C13/00 |
| A | US 9 696 564 B1 (ETZKORN JAMES [US] ET AL) 4 July 2017 (2017-07-04) * paragraph [0013] - paragraph [0016]; figures 1A-1D * | 1-15 | G06F30/23 B29C45/00 B29D11/00 G02C11/00 |
| A | US 2019/387619 A1 (VASQUEZ QUINTERO ANDRES FELIPE [BE]) 19 December 2019 (2019-12-19) * paragraph [0078] - paragraph [0081] * * paragraph [0085] * * paragraph [0087] * * paragraph [0111] * * paragraph [0116] * * paragraph [0133] * | 1-15 | |
| A | US 2014/262004 A1 (PUGH RANDALL B [US] ET AL) 18 September 2014 (2014-09-18) * claims 1-4,6-8; figures 6,8 * * paragraph [0092] * * paragraph [0124] * | 1-15 | TECHNICAL FIELDS SEARCHED (IPC) B29C B29B G06F G02C |
| A | HÜRKAMP ANDRÉ ET AL: "Integrated computational product and production engineering for multi-material lightweight structures", THE INTERNATIONAL JOURNAL OF ADVANCED MANUFACTURING TECHNOLOGY, SPRINGER, LONDON, vol. 110, no. 9-10, 11 September 2020 (2020-09-11), pages 2551-2571, XP037251657, ISSN: 0268-3768, DOI: 10.1007/S00170-020-05895-6 [retrieved on 2020-09-11] | 1-15 | |

The present search report has been drawn up for all claims

| Place of search | Date of completion of the search | Examiner |
|---|---|---|
| Munich | 5 December 2023 | Foulger, Caroline |

EPO FORM 1503 03.82 (P04C01)

## ANNEX TO THE EUROPEAN SEARCH REPORT
## ON EUROPEAN PATENT APPLICATION NO.

EP 23 18 2444

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2023

| Patent document cited in search report | Publication date | Patent family member(s) | | Publication date |
|---|---|---|---|---|
| WO 2023113361 A1 | 22-06-2023 | NONE | | |
| US 9696564 B1 | 04-07-2017 | NONE | | |
| US 2019387619 A1 | 19-12-2019 | EP | 3328166 A1 | 30-05-2018 |
| | | EP | 3549411 A1 | 09-10-2019 |
| | | JP | 6976328 B2 | 08-12-2021 |
| | | JP | 2019536291 A | 12-12-2019 |
| | | US | 2019387619 A1 | 19-12-2019 |
| | | WO | 2018099648 A1 | 07-06-2018 |
| US 2014262004 A1 | 18-09-2014 | AU | 2014201483 A1 | 02-10-2014 |
| | | BR | 102014006302 A2 | 23-12-2014 |
| | | CA | 2845957 A1 | 15-09-2014 |
| | | CN | 104044282 A | 17-09-2014 |
| | | EP | 2778762 A2 | 17-09-2014 |
| | | HK | 1202161 A1 | 18-09-2015 |
| | | JP | 6411038 B2 | 24-10-2018 |
| | | JP | 2014182388 A | 29-09-2014 |
| | | KR | 20140113518 A | 24-09-2014 |
| | | RU | 2014109940 A | 20-09-2015 |
| | | SG | 10201400416Q A | 30-10-2014 |
| | | TW | 201502642 A | 16-01-2015 |
| | | US | 2014262004 A1 | 18-09-2014 |

EPO FORM P0459

For more details about this annex : see Official Journal of the European Patent Office, No. 12/82